# EUROPÄISCHE PATENTSCHRIFT

(11) **EP 1 570 969 B1**
(45) Veröffentlichungstag und Bekanntmachung des Hinweises auf die Patenterteilung: **09.03.2016**
(21) Anmeldenummer: 05000247.6
(22) Anmeldetag: 07.01.2005
(51) Int. Cl.: B29C 44/38, B29C 44/18, B29C 44/12, B62D 29/00

(54) **Verfahren zur Herstellung sektionsgeteilter Paneele**
Method for the production of panels divided into sections
Procédé pour la production de panneaux divisés en sections

(30) Priorität: 04.03.2004 DE 102004011221
(43) Veröffentlichungstag der Anmeldung: 07.09.2005
(73) Patentinhaber: Fahrzeugwerk Bernard Krone GmbH, 48480 Spelle (DE)
(72) Erfinder: Krone, Bernard, Dr., 48480 Spelle (DE); Salling, Mads, 8800 Viborg (DK)
(74) Vertreter: Bünemann, Egon

(56) Entgegenhaltungen:
- EP-A1- 1 145 768
- DE-A1- 2 043 429
- GB-A- 2 107 258
- US-A- 3 258 889
- US-A- 3 302 362
- US-A- 3 402 520
- US-A- 6 099 768

## Beschreibung

Die Erfindung betrifft ein Verfahren zur Herstellung sektionsgeteilter Paneele.

Herkömmlich hergestellte, sektionsgeteilte Paneele mit innen befindlicher Ausschäumung werden vielfach zur Isolierung von Behältern oder in der Wandung von Fahrzeugaufbauten verwendet. Abhängig von der Position der Paneele, beispielsweise im Heck-, Front-, Dach-, Boden- oder Seitenbereich eines Kühlfahrzeugs, werden unterschiedliche Anforderungen an die Festigkeit der Paneele gestellt. Zwischen den Außenwänden befindliche Rippen, die die Paneele in zumindest zwei Sektionen unterteilen, tragen diesen Anforderungen Rechnung und sorgen für unterschiedliche Stabilität.

Es ist bekannt, die in den Paneelen befindlichen Sektionen nacheinander auszuschäumen. Hierbei wird über eine Befülleinrichtung, beispielsweise eine Lanze und in den Seitenwänden befindlichen Öffnungen der Schaum in die einzelnen Sektionen eingebracht. Aufgrund der Expansion des Schaums treten sehr hohe Druckkräfte auf, die zu starken Druckgradienten zwischen den einzelnen Sektionen führen. Bei ungenügender Festlegung der Rippen werden diese dann verschoben. Hierdurch wird eine kontinuierliche Ausschäumung der Paneele verhindert.

Durch die notwendige Festlegung der Rippen an den Außenwänden wird die Fertigung von Paneelen aufwändig, da Außenwände und Rippen zunächst ohne Befüllung komplett aneinander festgelegt und somit zusammengefügt werden. Erst dann kann die Befüllung stattfinden.

Aus der US 3,302,362 ist ein Verfahren der gattungsgemäßen Art bekannt, bei dem u.a. ein Schaummaterial mittels einer Schaumdüse eingebracht wird. Der dortige Aufbau ist ein mehrschichtiger Aufbau mit einer ersten Plywood-Schicht, woran sich die Schaumschicht anschließt. Daran schließt sich eine Schicht aus Fibermatten, eine Schicht aus Kunstsharz und noch eine Schicht aus einem Gel Coat-Material an. Um Schichten miteinander zu verbinden, kann auf den Schaum und eine eingebrachte Rippe ein selbstklebender Film aus einem Kunststoffmaterial eingebracht werden, um z.B. die sich anschließende Fibermatte zu befestigen. Eine Außenwandung auf die Schaumschicht zu setzen, um ein derartiges Paneel beispielsweise bei Fahrzeugaufbauten einsetzen zu können, ist nicht vorgesehen.

Aus der US 6,099,768 ist ein Verfahren bekannt, bei dem ebenfalls modular aufgebaute Paneele herzustellen sind, die mit einem Schaummaterial und innenliegenden Verstärkungsteilen, z.B. U-förmige oder C-förmige Teilen ausgefüllt werden. Auf die eingebrachten Verstärkungsteile kann jedoch eine Außenwandung nicht aufgebracht werden. Darüber hinaus ist dieses Paneel nicht druckentlastend zu befüllen.

Aus der US 3,258,889 ist es bekannt, zur Herstellung sektionsgeteilter Paneele stabilitätserhöhende Rippen vorzusehen, wobei die Rippen beim Einbringen des Schaumstoffs benetzt und Verkleben mit der Außenwand des Paneels:

Aus der US 3,402,520 A ist ein leichtgewichtiges Paneel mit einer relativ dünnen Oberfläche bekannt, bei der auch noch weitere Außenwände vorgesehen werden. Somit ist es für den Fachmann denkbar, auch weiße Außenwände mit den Rippen zu verkleben.

Der Erfindung liegt die Aufgabe zugrunde, ein Verfahren zu schaffen, welches eine schnelle und einfache Herstellung von sektionsgeteilten Panellen ermöglicht. Die Aufgabe wird gelöst durch ein Verfahren gemäß Anspruch 1.

Das erfindungsgemäße Verfahren dient der Befüllung eines herkömmlichen Paneels, welches innerhalb einer Umrandung und durch zumindest eine Rippe getrennte Sektionen aufweist, die auszuschäumen sind. Die Rippen selbst liegen wiederum zwischen zwei Außenwänden. Das erfindungsgemäße Verfahren zeichnet sich dadurch aus, dass eine Außenwand mit einer Umrandung liegend positioniert wird, wobei innerhalb der Umrandung zumindest eine Rippe zur Aufteilung des Innenraums der Paneele in zumindest teilweise getrennte Sektionen verwendet wird. Mit Hilfe zumindest einer oberhalb der Außenwand befindlichen Schaumdüse wird der Schaum von oben in die durch die Rippe getrennten Sektionen eingebracht, wobei die Schaumdüse und das Paneel relativ zueinander bewegbar sind. Hiermit wird der gesamte Innenraum des Paneels mit Schaum versehen. Anschließend wird die weitere Außenwand auf die befüllte Umrandung und/oder auf die Rippe aufgesetzt, wobei die mit Schaum benetzte Rippe durch diesen mit der weiteren Außenwand verbindbar ist.

Durch die Kontinuität des Verfahrens, beispielsweise durch das auf einer Produktionsstraße kontinuierlich unter Schaumdüsen her bewegte Paneel, wird Zeit eingespart, die bei im Stand der Technik bekannten Befüllungsverfahren z. B. durch das Verfahren der Lanze benötigt werden würde. Das Verfahren ist weiterhin einfacher und sicherer als die bislang verwendeten Verfahren, da die Befüllung des Innenraums des Paneels visuell kontrollierbar ist. Außerdem können ein oder mehrere Rippen nahezu beliebig innerhalb des Innenraums des Paneels positioniert werden, so dass spezifische Anforderungen an lokale Festigkeiten problemlos erfüllt werden können.

Durch einfache Variation der Relativbewegung von Schaumdüse und Paneele kann das Raumgewicht des Schaums eingestellt werden. Dies kann ohne eine Änderung der Schaumart erfolgen und somit durch eine auch in zeitlicher Hinsicht einfache und vorteilhafte Einstellbarkeit der Relativbewegungen zueinander.

Es liegt nicht im Rahmen der Erfindung, statt einer Schaumdüse andere bereits bekannte Vorrichtungen zum Befüllen mit Schaum oder flüssigem Schaum, beispielsweise Schläuche, zu verwenden.

Bei einer weiteren Ausbildung eines erfindungsgemäßen Verfahrens kann die Rippe befestigt oder unbefestigt auf der Außenwand positioniert werden, bevor die Befüllung der Sektionen mit Schaum beginnt. Somit kann auf die Festlegung verzichtet werden und es wird weiterhin Zeit gegenüber dem herkömmlichen Verfahren eingespart. Genau wie in dem in Anspruch 1 beschriebenen Verfahren dient hierbei der Schaum als Klebstoff und befestigt so die Rippen, beispielsweise mit der weiteren Außenwand. Aufgrund der nahezu gleichzeitigen Befüllung der verschiedenen Sektionen des Paneels kommt es nicht zur Ausbildung von größeren Druckgradienten zwischen diesen Sektionen, womit die Position der auch unbefestigten Rippen beibehalten wird.

Erfindungsgemäß ist vorgesehen, durch die Verwendung unterschiedlicher Rippen und/oder Umrandungs- und/oder Außenmaterialien die Festigkeit des Paneels einzustellen. Dies kann zusätzlich durch die Verwendung unterschiedlicher Schaumdichten erweitert werden. Es liegt dabei im Rahmen des erfindungsgemäßen Verfahrens, nicht nur die gleichen Schaumkomponenten zu verwenden, sondern auch unterschiedliche Schäume vorzusehen.

Bei einer weiteren erfindungsgemäßen Ausgestaltung wird die Außenwand fest mit der Umrandung verbunden. Damit wird das Grundgerüst des Paneels bereits an einem anderen Ort vorgefertigt, bevor es mit Schaum und/oder Rippen befüllt wird.

Handelt es sich bei dem für die Ausschäumung des Paneels verwendeten Schaum um ein stark expandierendes Material, so ist bei einer weiteren erfindungsgemäßen Ausgestaltung vorgesehen, die weitere Außenwand druckbeaufschlagt auf der befüllten Umrandung und/oder Rippe zu positionieren. Hierdurch wird einer diskontinuierlichen Aushärtung, wie sie im Stand der Technik auftritt, entgegengewirkt.

Der zu starken Ausbildung von Drücken kann dadurch begegnet werden, daß für die Befüllung nicht benötigter Schaum und/oder Luft durch Öffnungen in der Umrandung abgeführt wird.

Weitere Vorteile und Einzelheiten des erfindungsgemäßen Verfahrens ergeben sich aus den übrigen Unteransprüchen sowie der nachfolgend beschriebenen schematischen Zeichnung. In der Zeichnung zeigt:

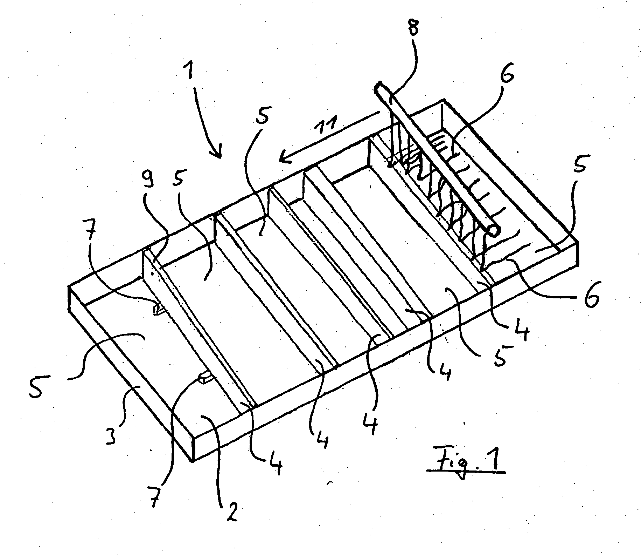

- Fig. 1: das erfindungsgemäße Verfahren während des Befüllvorgangs.

Der in Fig. 1 dargestellte Verfahrensschritt betrifft den Befüllvorgang eines sektionsgeteilten Paneels 1. Eine Außenwand 2 ist mit einer Umrandung 3 verbunden, die den Innenraum des Paneels 1 umfaßt. Insgesamt fünf Rippen 4 teilen den Innenraum in sechs Sektionen 5, die mit dem Schaum 6 befüllt werden. Die Rippen 4 können sowohl an der Umrandung als auch an der Außenwand 2 festgelegt werden.

Eine der Rippen 4 ist mit Hilfe von Abstandshaltern 7 von der Außenwand 2 beabstandet. Während des Befüllvorgangs mit dem Schaum 6, der durch eine mehrere nicht näher gekennzeichnete Düsen aufweisende Befülleinrichtung 8 in den Innenraum des Paneels 1 eingebracht wird, wird die mit Abstandshaltern 7 beabstandete Rippe 4 vom Schaum zum Teil unterlaufen. Da der Schaum auch auf der oberen Seite 9 der entsprechenden Rippe 4 aufgebracht wird, ist die diese nach dem Aushärten des flüssigen Schaums 6 beidseitig verklebt.

Bei dem in Fig. 1 dargestellten Verfahrensschritt wird die Befüllvorrichtung 8 in Richtung des Pfeils 11 über das Paneel 1 hinwegbewegt. Genauso ist es auch denkbar, daß das Paneel 1 in die der Bewegungsrichtung 11 entgegengesetzte Richtung bewegt wird, womit ebenfalls eine Relativbewegung zwischen der Befüllvorrichtung 8 mit ihren Schaumdüsen und dem Paneel 1 erzeugt wird.

Statt einer in etwa die Breite des Paneels aufweisenden Befüllvorrichtung 8, die für eine einfache und kontinuierliche Befüllung in der Breite des Paneels sorgt, ist es auch denkbar, lediglich eine einzelne oder einige wenige Schaumdüsen in Richtungen, die auch quer zur Bewegungsrichtung 11 liegen, über das Paneel 1 hinwegzuführen. Hierdurch können unterschiedliche Raumgewichte des Schaums innerhalb des Paneels erzeugt werden, beispielsweise durch mehrmaliges Überstreichen mit Flüssigschaum des gleichen Ortes innerhalb des Paneels, womit sich entsprechend die Festigkeit des Paneels variieren läßt.

Bei einer weiteren erfindungsgemäßen Ausgestaltung des Verfahrens ist es ebenso vorgesehen, die Geschwindigkeit der Relativbewegung in Bewegungsrichtung 11 zu variieren. Auch hierbei ergibt sich eine unterschiedliche Befüllung beispielsweise der einzelnen Sektionen 5 mit Schaum 6 , wodurch wieder ein unterschiedliches Raumgewicht des Schaums 6 erzeugt wird. Auch damit werden unterschiedliche Festigkeiten eines nach einem erfindungsgemäßen Verfahren hergestellten Paneels 1 erzeugt.

## Patentansprüche

1. Verfahren zur Herstellung sektionsgeteilter Paneele (1) für beispielsweise Fahrzeugaufbauten, insbesondere Isolierplatten, welche innerhalb einer Umrandung (3) zwischen zwei Außenwänden (2) durch zumindest eine Rippe (4) zumindest teilweise getrennte Sektionen (5) aufweisen, die durch Einbringen eines Schaums (6) ausgeschäumt werden, wobei eine Außenwand (2) mit einer Umrandung (3) liegend positioniert wird, der Schaum (6) mit Hilfe zumindest einer oberhalb der Außenwand (2) befindlichen Schaumdüse von oberhalb in die durch die Rippe (4) getrennten Sektionen (5) eingebracht wird und die Schaumdüse und das Paneel (1) relativ zueinander bewegbar sind, und anschließend die weitere Außenwand (2) auf die Umrandung (3) und/oder die Rippe (4) aufgesetzt wird, **dadurch gekennzeichnet, dass** die Rippe vor einem Aufsetzen der Außenwand mit Schaum (6) benetzt wird, durch den Schaum (6) die Rippe (4) mit der weiteren Außenwand (2) verbindbar ist und dass für die Befüllung nicht benötiger Schaum (6) und/oder Luft durch Öffnungen in der Umrandung (3) abgeführt wird, wobei das Raumgewicht des Schaums (6) durch Variation der Relativbewegung von Schaumdüse und Paneele (1) eingestellt wird.

2. Verfahren nach Anspruch 1, **dadurch gekennzeichnet, dass** die Rippe (4) befestigt oder unbefestigt auf der Außenwand (2) positioniert wird.

3. Verfahren nach Anspruch 1 oder 2, **dadurch gekennzeichnet, dass** die Rippe (4) mit Hilfe von zumindest einem Abstandshalter (7) von der Außenwand (2) beabstandet wird, anschließend vom Schaum (6) unterlaufen und dadurch beidseitig verklebt wird.

4. Verfahren nach einem der Ansprüche 1 bis 3, **dadurch gekennzeichnet, dass** die Festigkeit des Paneels (1) durch Variation des Rippen- und/oder Umrandungs- und/oder Außenwandmaterials eingestellt wird.

5. Verfahren nach einem der Ansprüche 1 bis 4, **dadurch gekennzeichnet, dass** die Festigkeit des Paneels (1) durch Verwendung unterschiedlicher Schaumdichten und/oder Schäume (6) variiert wird.

6. Verfahren nach einem der Ansprüche 1 bis 5, **dadurch gekennzeichnet, dass** Umrandung (3) und Außenwand (2) aneinander festgelegt werden.

7. Verfahren nach einem der Ansprüche 1 bis 6, **dadurch gekennzeichnet, dass** die weitere Außenwand (2) druckbeaufschlagt auf der Umrandung (3) und/oder der Rippe (4) positioniert wird.

## Claims

1. Method for producing panels (1), which are divided into sections, for vehicle bodies for example, in particular insulating plates having sections (5) within an edge (3) between two outer walls (2), which sections are separated at least in part by at least one rib (4) and are foamed by the introduction of a foam (6), one outer wall (2) being positioned flat against an edge (3), the foam (6) being introduced into the sections (5), which are divided by the rib (4), from above by means of at least one foam nozzle arranged above the outer wall (2) and the foam nozzle and the panel (1) being movable relative to one another, and the other outer wall (2) then being placed on the edge (3) and/or the rib (4), **characterised in that** the rib is wetted with foam (6) before the outer wall is placed thereon, the rib (4) is connectable to the other outer wall (2) by means of the foam (6), and **in that** foam (6) not required for the filling process and/or air is removed through openings in the edge (3), the density of the foam (6) being set by varying the relative movement of the foam nozzle and panels (1).

2. Method according to claim 1, **characterised in that** the rib (4) is positioned on the outer wall (2) so as to be either fastened or not fastened thereto.

3. Method according to either claim 1 or claim 2, **characterised in that** the rib (4) is spaced apart from the outer wall (2) by means of at least one spacer (7), and the foam (6) then runs beneath said rib and bonds it on either side as a result.

4. Method according to any of claims 1 to 3, **characterised in that** the strength of the panel (1) is adjusted by varying the rib material and/or edge material and/or outer wall material.

5. Method according to any of claims 1 to 4, **characterised in that** the strength of the panel (1) is varied by using different foam densities and/or foams (6).

6. Method according to any of claims 1 to 5, **characterised in that** the edge (3) and the outer wall (2) are fixed to one another.

7. Method according to any of claims 1 to 6, **characterised in that** the other outer wall (2) is positioned on the edge (3) and/or the rib (4) such that pressure is applied to said wall.

## Revendications

1. Procédé de fabrication de panneaux (1) divisés en sections destinés par exemple à des carrosseries de véhicules, en particulier des plaques isolantes, qui comportent à l'intérieur d'une bordure (3), entre deux parois extérieures (2), des sections (5) qui sont séparées au moins partiellement par au moins une nervure (4) et qui sont remplies d'une mousse (6), une paroi extérieure (2) étant positionnée avec une bordure (3), la mousse (6) étant introduite au moyen d'au moins une buse de mousse, se trouvant au-dessus de la paroi extérieure (2, depuis le haut dans les sections (5) séparées par la nervure (4) et la buse de mousse et le panneau (1) étant mobiles l'un par rapport à l'autre, puis l'autre paroi extérieure (2) étant placée sur la bordure (3) et/ou la nervure (4), **caractérisé en ce que** la nervure est mouillée avant de placer la paroi extérieure avec de la mousse (6), la nervure (4) peut être reliée à l'autre paroi extérieure (2) par la mousse (6) et **en ce que** la mousse (6) qui n'est pas utilisée pour le remplissage et/ou de l'air est évacué par des orifices ménagés dans la bordure (3), la densité de la mousse (6) étant réglée par variation du mouvement relatif du la buse de mousse et des panneaux (1).

2. Procédé selon la revendication 1, **caractérisé en ce que** la nervure (4) est positionnée en étant fixée ou non fixée à la paroi extérieure (2).

3. Procédé selon la revendication 1 ou 2, **caractérisé en ce que** la nervure (4) est espacée de la paroi extérieure (2) au moyen d'au moins une pièce d'écartement (7) puis est contournée par la mousse (6) et est ainsi collée des deux côtés.

4. Procédé selon l'une des revendications 1 à 3, **caractérisé en ce que** l'on règle la résistance du panneau (1) en modifiant le matériau de la nervure et/ou de la bordure et/ou de la paroi extérieure.

5. Procédé selon l'une des revendications 1 à 4, **caractérisé en ce que** l'on modifie la résistance du panneau (1) en utilisant différentes densités de mousse et/différentes de mousses (6).

6. Procédé selon l'une des revendications 1 à 5, **caractérisé en ce que** l'on fixe la bordure (3) et la paroi extérieure (2) l'une à l'autre.

7. Procédé selon l'une des revendications 1 à 6, **caractérisé en ce que** l'on positionne l'autre paroi extérieure (2) sous pression sur la bordure (3) et/ou la nervure (4).
